# EUROPÄISCHE PATENTSCHRIFT

(11) **EP 2 422 164 B1**
(45) Veröffentlichungstag und Bekanntmachung des Hinweises auf die Patenterteilung: **01.10.2014**
(21) Anmeldenummer: 10714640.9
(22) Anmeldetag: 22.04.2010
(51) Int. Cl.: G01D 5/04

(54) **WINKELSENSOR**
ANGLE SENSOR
CAPTEUR ANGULAIRE

(30) Priorität: 24.04.2009 DE 102009018893
(43) Veröffentlichungstag der Anmeldung: 29.02.2012
(73) Patentinhaber: Leopold Kostal GmbH & Co. KG, 58513 Lüdenscheid (DE)
(72) Erfinder: RÜBENHAGEN, Arnd, 46537 Dinslaken (DE); MOLDENHAUER, Knut, 58097 Hagen (DE); PÜTTER, Thomas, 58802 Balve (DE); TRINN, Alexander, 58515 Lüdenscheid (DE)
(74) Vertreter: Kerkmann, Detlef
(86) Internationale Anmeldenummer: PCT/EP2010/055369
(87) Internationale Veröffentlichungsnummer: WO 2010/122114

(56) Entgegenhaltungen:
- EP-A1- 1 132 716
- US-A1- 2007 205 762

## Beschreibung

Die Erfindung betrifft einen Winkelsensor zur Erfassung der Drehstellung einer drehbaren Welle mit einem drehmomentübertragend mit der Welle verbundenen Antriebszahnrad und zumindest einem direkt durch dieses angetriebenen Messzahnrad, wobei aus der Winkelstellung des/der Messzahnrades/-räder die Winkelstellung der Welle ermittelbar ist.

Aus der EP 1 132 716 A1 ist ein Winkelsensor gemäß dem Oberbegriff des Patentanspruchs 1 bekannt geworden. Den verschiedenen, dort gezeigten Sensorausführungen zur Erfassung der Drehstellung einer Welle ist gemeinsam, dass durch ein mit der Welle drehmomentübertragend verbundenes Antriebszahnrad ein oder mehrere Messzahnräder angetrieben werden. Die Messzahnräder sind mit Drehstellungssensoren versehen, durch die ihre jeweilige Winkelstellung erfassbar ist, wobei als Beispiele für solche Drehstellungssensoren Hall-Sensoren und Potentiometer genannt sind. Die Messzahnräder sind dabei über unterschiedlich ausgestaltete, federnde Lagerelemente spielfrei an das starr und fest mit der Welle verbundene Antriebszahnrad gekoppelt. Durch diese Art der Ankopplung ist es möglich, statische und/oder dynamische Abweichungen der Drehachse der Welle von der idealen Lage dieser Drehachse zu kompensieren. Um dies zu erreichen, muss jedoch in Kauf genommen werden, dass die Drehachsen der Messzahnräder statisch und/oder dynamisch von deren idealer Lage abweichen, was zu nicht unerheblichen Messfehlern führen kann, wenn beispielsweise ein in einem Messzahnrad aufgenommener Permanentmagnet sich im Bezug auf einen diesem zugeordneten Hall-Sensor statt um die vorgesehene Drehachse um eine davon abweichende Achse dreht, oder statt der allein vorgesehenen Drehbewegung um die vorgesehene Drehachse eine zusätzliche Relativbewegung gegenüber dieser ausführt.

Der Winkelsensor gemäß der vorliegenden Erfindung hat gegenüber diesem vorbekannten Stand der Technik den Vorteil, dass die Drehachsen der Messzahnräder fixiert werden können, so dass die vorgenannten Nachteile vermieden sind.

Dies wird erfindungsgemäß dadurch erreicht, dass das Antriebszahnrad zwei bezüglich seines Umfanges einander gegenüberliegend angeordnete, sich in radialer Richtung zur Drehachse hin erstreckende Mitnehmer aufweist, die in zugeordnete Ausnehmungen eines mit der Welle starr verbundenen Lagerrings eingreifen, wobei zumindest einer der Mitnehmer in Umfangsrichtung federelastisch nachgiebig ausgebildet ist.

Durch diese erfindungsgemäße Ausgestaltung des Winkelsensors ist es möglich, die Drehachse des Antriebszahnrades beispielsweise durch Lagerung im Gehäuse des Winkelsensors zu fixieren, so dass auch die Drehachsen der Messzahnräder in Relation zu dieser festgelegt werden können. Statische und/oder dynamische Abweichungen der Drehachse der drehbaren Welle werden durch die erfindungsgemäße Drehkopplung kompensiert.

In einer vorteilhaften Ausführungsform ist ein Mitnehmer starr ausgebildet, und der in Umfangsrichtung federelastisch nachgiebig ausgebildete Mitnehmer mit einstückig angeformten Federärmchen versehen, die weiterhin bevorzugt in Ruhelage unter leichter Vorspannung an den beiden Kanten der zugeordneten Ausnehmung des Lagerrings anliegen.

Weitere vorteilhafte Ausgestaltungen und Weiterbildungen sind in den abhängigen Ansprüchen angegeben. Ein Ausführungsbeispiel der Erfindung ist in der Zeichnung dargestellt und wird im folgenden anhand der Zeichnung näher erläutert.

Es zeigen
- **Fig. 1**: eine Ausführungsform des erfindungsgemäßen Winkelsensors als magnetischer Lenkwinkelsensor für ein Kraftfahrzeug in einer Explosionsdarstellung
- **Fig. 2**: die Zahnräder und der Lagerring aus Fig. 1 in einer Detailansicht von der Unterseite

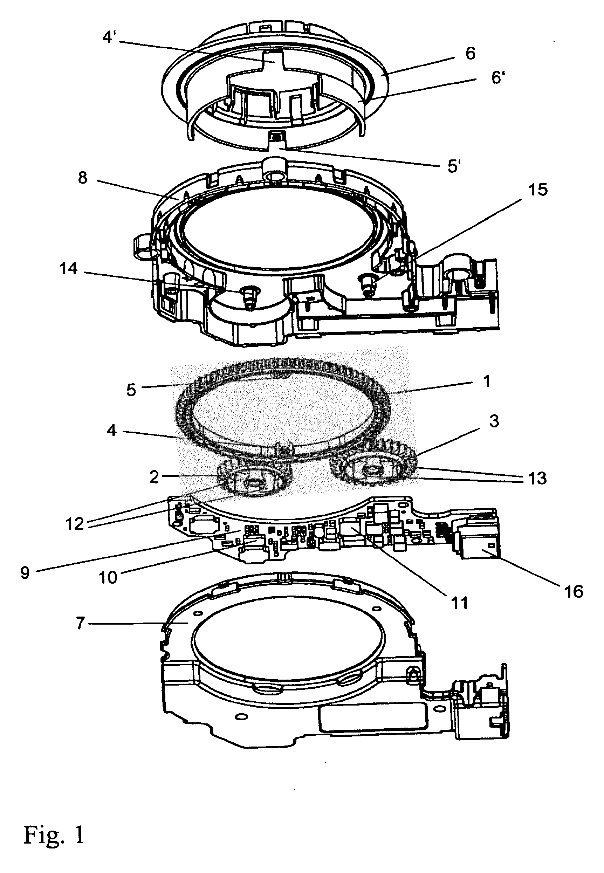

In Fig. 1 ist ein erfindungsgemäßer Winkelsensor in einer Ausführung als magnetischer Lenkwinkelsensor für ein Kraftfahrzeug dargestellt. Die drehbare Welle, deren Drehstellung durch den Winkelsensor erfasst wird, ist in diesem Falle die in der Zeichnung nicht dargestellte Lenkspindel des Kraftfahrzeugs.

Zwischen einem Gehäuseunterteil 7 und einem Gehäuseoberteil 8 des Winkelsensorgehäuses ist ein Antriebszahnrad 1 drehbar gelagert. In kämmenden Eingriff mit diesem Antriebszahnrad 1 gestellt sind zwei, in dem Gehäuseoberteil 8 auf zur Drehachse des Antriebszahnrades 1 parallel ausgerichteten Achsen 14, 15 drehbar gelagerte Messzahnräder 2, 3. Sowohl das Antriebszahnrad 1 als auch die Messzahnräder 2, 3 sind ebenso wie auch die das Sensorgehäuse bildenden Gehäuseunter- und Gehäuseoberteile 7, 8 als Kunststoff-Spritzgussteile aus jeweils geeigneten Kunststoffen hergestellt. Die Messzahnräder 2, 3 sind kleiner als das Antriebszahnrad 1 und weisen unterschiedliche Zähnezahlen auf, so dass aus den jeweiligen Winkelstellungen der Messzahnräder 2, 3 in einer beispielsweise aus der deutschen Offenlegungsschrift DE 10 2006 006 359 A1 bekannten Weise aus einem Schwebungswinkel die Winkelstellung des Antriebszahnrades 1 und somit der Welle auch über mehrere Umdrehungen eindeutig ermittelbar ist. Die zur Ermittlung der Drehstellung der Welle erforderliche Erfassung der Winkelstellung der Messzahnräder 2, 3 erfolgt mittels auf einer ebenfalls in dem Winkelsensorgehäuse 7, 8 aufgenommenen Leiterplatte 9 angeordneter Hall-Sensoren 10, 11, die jeweils die Ausrichtung der durch in den Messzahnrädern 2, 3 angeordnete Permanentmagneten 12, 13 hervorgerufenen Magnetfelder detektieren. Die Hall-Sensoren 10, 11 befinden sich auf der von den Messzahnrädern 2, 3 abgewandten Unterseite der Leiterplatte 9, auf der darüber hinaus weitere elektronische Bauelemente einer Mess- und Auswerteelektronik des Winkelsensors aufgenommen sind. Eine exakte Positionierung der Hall-Sensoren 10, 11 gegenüber den Messzahnrädern 2, 3 und damit auch den Permanentmagneten 12, 13 erfolgt durch zwei in der Zeichnung verdeckte Bohrungen in der Leiterplatte, in die Fortsätze der die Messzahnräder tragenden Achsen 14, 15 eingreifen. Zur Verbindung mit anderen Steuergeräten ist am Rand der Leiterplatte 9 ein Steckverbinderteil 16 zur Kontaktierung mit einem passenden Gegensteckverbinderteil angebracht.

Eine drehmomentübertragende Verbindung des Antriebszahnrades 1 mit der drehbaren Welle, also mit der Lenkspindel, erfolgt mittels zweier an dem Antriebszahnrad 1 einstückig angeformter Mitnehmer 4, 5. Die Mitnehmer 4, 5 sind dabei bezüglich des Umfanges des Antriebszahnrades 1 einander gegenüberliegend angeordnet, und erstrecken sich in radialer Richtung zur Drehachse des Antriebszahnrades 1 hin. Die Mitnehmer 4, 5 greifen in zugeordnete Ausnehmungen 4', 5' eines mit der Welle starr verbundenen Lagerrings 6 ein, wobei der eine Mitnehmer 4 starr ausgebildet ist. Der andere Mitnehmer 5 ist mit einstückig angeformten Federärmchen 5a, 5b versehen, die in Umfangsrichtung federelastisch nachgiebig sind und in Ruhelage unter leichter Vorspannung an den beiden Kanten der zugeordneten Ausnehmung 5' des Lagerrings 6 anliegen. Der Lagerring 6 weist einen hohlzylindrischen Schaft 6' auf, welcher von oben in das Gehäuseoberteil 8 hinein und nach unten hin bis durch das Antriebszahnrad 1 hindurchragt. Der hohlzylindrische Schaft 6' des Lagerrings 6 ist dabei mit einem geringeren Außendurchmesser versehen als der Innendurchmesser des Antriebszahnrades 1, so dass zwischen diesen ein Spielausgleich in radialer Richtung möglich ist. An zwei einander gegenüberliegenden Seiten des hohlzylindrischen Schaftes 6' sind die Ausnehmungen 4', 5' zum Eingriff der Mitnehmer 4, 5 vorhanden.

Im Idealfall sollten die Drehachsen der Welle und des Antriebszahnrades 1 identisch sein, d.h. auf einer Geraden im Raum liegen. Im realen Zusammenbau spielen jedoch nicht unerhebliche Toleranzen bereits was die Lage dieser Achsen zueinander in einer festen Drehstellung angeht, also statische Toleranzen eine Rolle. Insbesondere im Falle des hier dargestellten Lenkwinkelsensors, bei dem die drehbare Welle durch die Lenkspindel des Kraftfahrzeugs gebildet ist, sind auch dynamische Toleranzen zu berücksichtigen, da bei der Lenkspindel ein gewisses Maß an Bewegungsspiel nicht zu eliminieren ist. Mittels der erfindungsgemäßen drehmomentübertragenden Verbindung werden Abweichungen der Drehachse der Welle von der Drehachse des Antriebszahnrades 1 kompensiert.

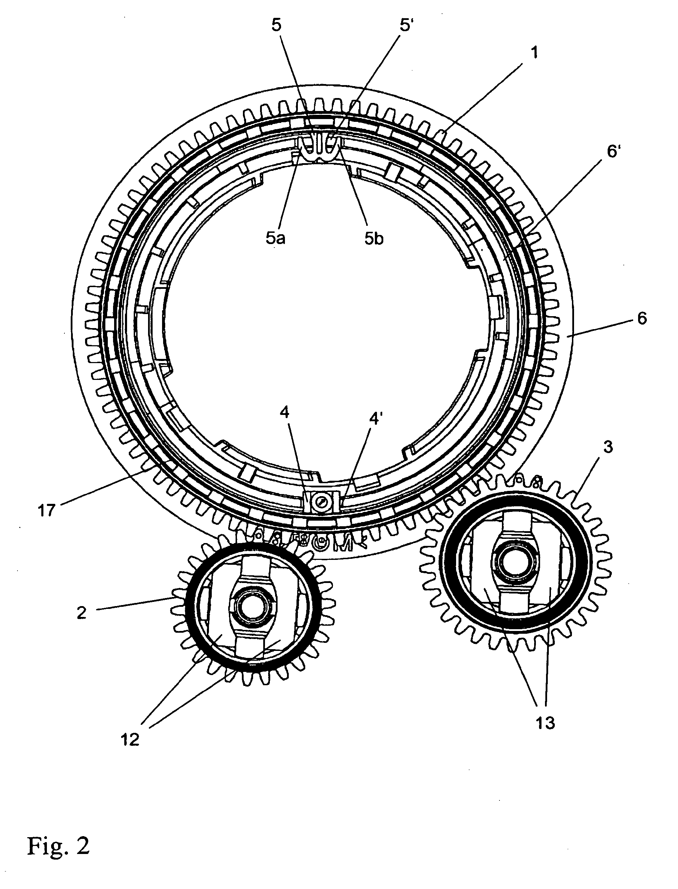

Zur Erläuterung der Funktionsweise dieser Drehübertragung ist in Fig. 2 eine Ansicht der Zahnräder in Richtung der Drehachse gezeigt. Sowohl das Antriebszahnrad 1 als auch die Messzahnräder 2, 3 sind im Sensorgehäuse möglichst spielfrei gelagert, so dass ihre Positionen zueinander festgelegt sind und eine hysteresefreie Drehübertragung gewährleistet ist. Zwischen dem hohlzylindrischen Schaft 6' des Lagerrings 6 und dem Antriebszahnrad 1 liegt ein ringförmiger Spalt 17, so dass der einzige Kontakt zwischen diesen im Eingriff der Mitnehmer 4, 5, des Antriebszahnrades 1 in den zugeordneten Ausnehmungen 4', 5' des Lagerrings 6 besteht. Ein Toleranzausgleich zwischen dem Lagerring 6 und dem Antriebszahnrad 1 und somit auch zwischen der Lenkspindel und dem Antriebszahnrad 1 erfolgt durch die freie Verschiebbarkeit des Lagerrings 6 gegenüber dem Antriebszahnrad 1 in Richtung der Verbindungslinie der beiden Mitnehmer 4, 5, sowie senkrecht zu dieser Richtung durch die Verschiebbarkeit des Lagerrings 6 aufgrund der Nachgiebigkeit der beiden Federärmchen 5a, 5b des einen elastisch ausgebildeten Mitnehmers 5. Durch den starren zweiten Mitnehmer 4, der stets in Kontakt mit beiden Kanten der ihm zugeordneten Ausnehmung 4' des Lagerrings 6 steht, ist gewährleistet, dass jede Drehbewegung des Lagerrings 6 hysteresefrei in eine Drehbewegung des Antriebszahnrades 1 und damit auch der Messzahnräder 2, 3 umgesetzt wird.

## Patentansprüche

1. Winkelsensor zur Erfassung der Drehstellung einer drehbaren Welle mit einem drehmomentübertragend mit der Welle verbundenen Antriebszahnrad (1) und zumindest einem direkt durch dieses angetriebenen Messzahnrad (2, 3), wobei aus der Winkelstellung des/der Messzahnrades/-räder (2, 3) die Winkelstellung der Welle ermittelbar ist, **dadurch gekennzeichnet, dass** das Antriebszahnrad (1) zwei bezüglich seines Umfanges einander gegenüberliegend angeordnete, sich in radialer Richtung zur Drehachse hin erstreckende Mitnehmer (4, 5) aufweist, die in zugeordnete Ausnehmungen (4', 5') eines mit der Welle starr verbundenen Lagerrings (6) eingreifen, wobei zumindest einer der Mitnehmer (5) in Umfangsrichtung federelastisch nachgiebig ausgebildet ist.

2. Winkelsensor nach Anspruch 1, **dadurch gekennzeichnet, dass** ein Mitnehmer (4) starr ausgebildet ist, und der in Umfangsrichtung federelastisch nachgiebig ausgebildete Mitnehmer (5) einstückig angeformte Federärmchen (5a, 5b) aufweist.

3. Winkelsensor nach Anspruch 2, **dadurch gekennzeichnet, dass** die Federärmchen (5a, 5b) in Ruhelage unter leichter Vorspannung an den beiden Kanten der zugeordneten Ausnehmung (5') des Lagerrings (6) anliegen.

4. Winkelsensor nach einem der Ansprüche 1 bis 3, **dadurch gekennzeichnet, dass** das Antriebszahnrad (1) und das zumindest eine Messzahnrad (2, 3) im Sensorgehäuse (7, 8) möglichst spielfrei gelagert sind.

5. Winkelsensor nach einem der Ansprüche 1 bis 4, **dadurch gekennzeichnet, dass** das zumindest eine Messzahnrad (2, 3) mit einem Permanentmagneten (7, 8) versehen ist, dessen Winkelstellung durch einen zugeordneten Magnetfeldsensor (10, 11) erfasst wird.

6. Winkelsensor nach einem der Ansprüche 1 bis 5, **dadurch gekennzeichnet, dass** ein zweites durch das Antriebszahnrad (1) direkt oder indirekt angetriebenes Messzahnrad (3) vorhanden ist, und dass aus der Winkelstellung der beiden Messzahnräder (2, 3) die Winkelstellung der Welle über mehr als eine vollständige Umdrehung hinaus ermittelbar ist.

7. Winkelsensor nach einem der Ansprüche 1 bis 6, **dadurch gekennzeichnet, dass** der Winkelsensor einen Lenkwinkelsensor in einem Kraftfahrzeug ausbildet.

## Claims

1. Angle sensor for detecting the rotational position of a rotatable shaft, having a torque-transmitting pinion gear drive (1) connected to the shaft and at least one measuring toothed wheel (2, 3) which is directly driven by the same, by which means the angular position of the shaft can be ascertained from the angular position of the measuring toothed wheel or wheels (2, 3) **characterised in that** the pinion gear drive (1) has two dogs (4, 5) which are arranged opposing each other in relation to its circumference, extending in a radial direction to the rotary shaft, and which engage in associated recesses (4', 5') of a bearing ring (6) which is rigidly connected to the shaft, for which purpose at least one of the dogs (5) is of an elastic, resilient design towards its circumference.

2. Angle sensor according to Claim 1, **characterised in that** one dog (4) is of a rigid design and the dog (5) of a flexible, resilient design towards its circumference has small, integrally moulded-on spring arms (5a, 5b).

3. Angle sensor according to Claim 2, **characterised in that**, in their rest position under slight preload, the small spring arms (5a, 5b) fit closely against the two edges of the associated recess (5') of the bearing ring (6).

4. Angle sensor according to any of Claims 1 to 3, **characterised in that** the pinion gear drive (1) and the at least one measuring toothed wheel (2, 3) are supported in the sensor housing (7, 8) with as little play as possible.

5. Angle sensor according to any of Claims 1 to 4, **characterised in that** the at least one measuring toothed wheel (2, 3) is provided with a permanent magnet (7, 8) whose angular position is detected by an associated magnetic field sensor (10, 11).

6. Angle sensor according to any of Claims 1 to 5, **characterised in that** a second measuring toothed wheel (3) is provided which is directly or indirectly driven by the pinion gear drive (1) and that, based on the angular position of the two measuring toothed wheels (2, 3), the angular position of the shaft can be ascertained beyond more than one complete rotation.

7. Angle sensor according to any of Claims 1 to 6, **characterised in that** the angle sensor constitutes a steering angle sensor in a motor vehicle.

## Revendications

1. Capteur d'angle pour la détection de la position de rotation d'un arbre rotatif, qui comprend une roue dentée d'entraînement (1), qui est reliée à transmission de couple de rotation à l'arbre, et au moins une roue dentée de mesure (2, 3), entraînée directement ou indirectement par celle-ci, sachant que la position angulaire de l'arbre peut être déterminée à partir de la position angulaire de la roue / des roues de mesure (2, 3), **caractérisé en ce que** la roue dentée d'entraînement (1) présente deux entraîneurs (4, 5) qui, par rapport à sa circonférence, sont disposées à l'opposé l'une de l'autre en s'étendant dans la direction radiale, vers l'axe de rotation, lesquels entraîneurs s'engagent dans des évidements associés (4', 5') d'une bague de palier (6) qui est reliée rigidement à l'arbre, sachant qu'au moins l'un des entraîneurs (5) est de conception élastique, flexible dans la direction périphérique.

2. Capteur d'angle selon la revendication 1, caractérisé en est qu'est prévu un entraîneur (4) de conception rigide et que l'entraîneur élastique, de conception flexible (5) est doté de petits bras (5a, 5b) formés d'une pièce..

3. Capteur d'angle selon la revendication 2, **caractérisé en ce que** les petits bras élastique (5a, 5b), en position de repos, portent, avec une légère précontrainte, contre les deux bords de l'évidement (5') y associé de l'anneau de montage (6).

4. Capteur d'angle selon l'une des revendications 1 à 3, **caractérisé en ce que** la roue dentée d'entraînement (1) et la roue dentée de mesure (2, 3) au moins prévue sont montées, autant que possible sans jeu, dans le boîtier (7, 8) du capteur.

5. Capteur d'angle selon l'une des revendications 1 à 4, caractérisé en ce qua la roue dentée de mesure (2, 3) au moins prévue est pourvue d'aimants permanents (7, 8), dont la position angulaire est détectée par un détecteur de champ magnétique associé (10, 11).

6. Capteur d'angle selon l'une des revendications 1 à 5, **caractérisé en ce qu'**il comprend une deuxième roue dentée de mesure (3) qui est entraînée, directement ou indirectement, par la roue dentée d'entraînement (1), et que la position angulaire de l'arbre peut être déterminée au-delà de plus d'une rotation complète, à partir de la position angulaire des deux roue dentée de mesure (2, 3).

7. Capteur d'angle selon l'une des revendications 1 à 6, **caractérisé en ce que** le capteur d'angle forme un capteur d'angle de braquage dans un véhicule automobile.
